# EUROPEAN PATENT SPECIFICATION

(11) **EP 1 743 328 B1**
(45) Date of publication and mention of the grant of the patent: **14.05.2008**
(21) Application number: 05718726.2
(22) Date of filing: 14.04.2005
(51) Int. Cl.: G11B 5/105

(54) **MAGNETO OPTICAL DEVICE**
MAGNETOOPTISCHE EINRICHTUNG
DISPOSITIF MAGNETO-OPTIQUE

(30) Priority: 23.04.2004 EP 04101688
(43) Date of publication of application: 17.01.2007
(73) Proprietor: Koninklijke Philips Electronics N.V., 5621 BA Eindhoven (NL)
(72) Inventor: ZIJP, Ferry, NL-5656 AA Eindhoven (NL); VULLERS, Rudolf, J., M., NL-5656 AA Eindhoven (NL)
(74) Representative: Uittenbogaard, Frank
(86) International application number: PCT/IB2005/051226
(87) International publication number: WO 2005/104096

(56) References cited:
- WO-A-20/04114295
- US-A1- 2003 067 845
- US-B1- 6 226 233

## Description

### FIELD OF THE INVENTION

The invention relates to a magneto optical device comprising a magneto optical read and/or write head with a coil on a coil holder, the coil holder comprising a transparent aperture in the coil for passing a laser beam.

### BACKGROUND OF THE INVENTION

An embodiment of a system of the type mentioned in the opening paragraph is known from United States Patent 6,069,853.

In such devices optical recording techniques are combined with a magneto optical head that in operation is brought close to a recording layer on a disk. Laser light is used to read and/or write on the disk. The laser beam is shone through the coil which is e.g. incorporated on a slider or on an actuator. New generations of optical recording disks have ever larger data capacity and smaller bit sizes. There is a tendency that the wavelength for the optical readout decreases and the numerical aperture (NA) of the optical pick up unit (OPU) increases for each new generation. Focal length and working distance decrease, and tilt margins become ever more stringent. For future generations of optical storage systems the numerical aperture of the objective will rise to NA=0.85, or even NA=0.95, to improve resolving power. Such high values of NA however pose a problem in that the laser light as it exits the coil holder, exits such coil holder over a large range of angles. The inventors have noticed a reduction in the intensity of the laser light hitting the disk, and also a creation of stray light at high NA.

### SUMMARY OF THE INVENTION

It is an object of the invention to provide a magneto-optical device in which these problems are reduced.

To this end the magneto-optical device in accordance with the invention is characterized in that the coil holder is, at the position where the laser shines through the coil, concavely shaped with a radius of curvature between 0.5D and 15 D where D is the diameter of the concavely shaped exit surface. The object is achieved by the magneto-optical device in accordance with the invention.

As the numerical aperture increases up to 0.85, and beyond to 0.95 or larger than 0.85 but smaller than 1, the sine of the angle for a flat exit surface increases to values of 0.85 or < 1, even 0.95. However, at rather oblique angles the laser light reflection on the coil holder-air surface increases sharply, in fact reducing the effective numerical aperture NA and the laser light intensity and increasing stray light. In a magneto-optical device an anti-reflection coating may be used to reduce the problem, however, even so large numerical apertures pose a problem with regard to the design of the anti-reflection (AR) coating that has to be applied on the head-air interface in order to optimise the transmission of the lens. This AR coating should suppress the reflection of light at this interface for both *p* and *s* polarisation for the entire angular spectrum of 0° up to Sin⁻¹(0.95) =72°, while keeping the retardance of the coating (the phase difference between the *p* and *s* polarisation of the transmitted light) close to zero in order to avoid loss of the (polarisation sensitive) MO signal. The inventors have realized that although ever more sophisticated anti-reflection coatings may partially overcome the problem, at high angles, i.e. when the numerical aperture NA rises above 0.8 to 0.85 they fail.

In the magneto optical device in accordance with the invention, the exit surface of the coil holder is concavely shaped at the aperture with a radius of curvature R lying between 0.5D and 15 D where D is the diameter of the concavely shaped exit surface. The exit surface is the surface from which the laser beam exits. The curvature of the exit surface allows effective anti-reflective coatings may to be made, and even without an anti-reflective coating an advantage is obtained.

Preferably the radius of curvature lies between 0.8D and 10 D, most preferably between 1.5D and 4 D. This allows even better results to be obtained.

In relation to the lower limits of the curvature R, i.e. values of 0.5D to 1.5 D, it is remarked that it is possible within the framework to provide a strong curvature, even so strong that the laser light exits at approximately right angle throughout the exit surface (R is approximately 0.5D). However, this requires exits surfaces of a small radius of curvature and a relatively pronounced curvature. Such a pronounced curvature is relatively difficult to achieve, and requires a very good alignment of laser and exit surface. Furthermore such strongly curved surface have a pronounced optical influence.

These and other aspects of the invention are apparent from and will be elucidated with reference to the embodiments described hereinafter.

### BRIEF DESCRIPTION OF THE DRAWINGS

In the drawings:
Figs. 1A and 1B schematically illustrate two designs of heads for magneto optical devices.
Fig. 2 schematically illustrates one of the designs of Fig. 1A in more detail.
Fig. 3 schematically illustrates one of the designs of Fig. 1B in more detail.
Fig. 4 gives a top view of a coil showing the aperture through which in operation a laser beam is shone.
Fig. 5 schematically illustrates in cross-section the light path of a laser beam through the coil.
Fig. 6 illustrates the reflectance on a surface as a function of the sine of the angle of the light in air after refraction at that surface.
Fig. 7 illustrates the basic principle of the invention.
Fig. 8 illustrates in a graphical form the relation between numerical aperture NA, R and D.
Figs. 9A-D and 10A-C illustrate a method for producing coil holders for an optical device.
Figs. 11A-C illustrate a further method for producing coil holders for an optical device*.*
Figs. 12A-C illustrate an alignment method.
The figures are not drawn to scale. Generally, identical components are denoted by the same reference numerals in the figures.

### DETAILED DESCRIPTION OF PREFERRED EMBODIMENTS

The present invention is applicable to each and any type of magneto optical device having a read and/or write head and a laser which in operation shines through a coil. Whether the magneto optical device is of the so-called Far Field type and whether or not use is made of a slider or of an actuator.

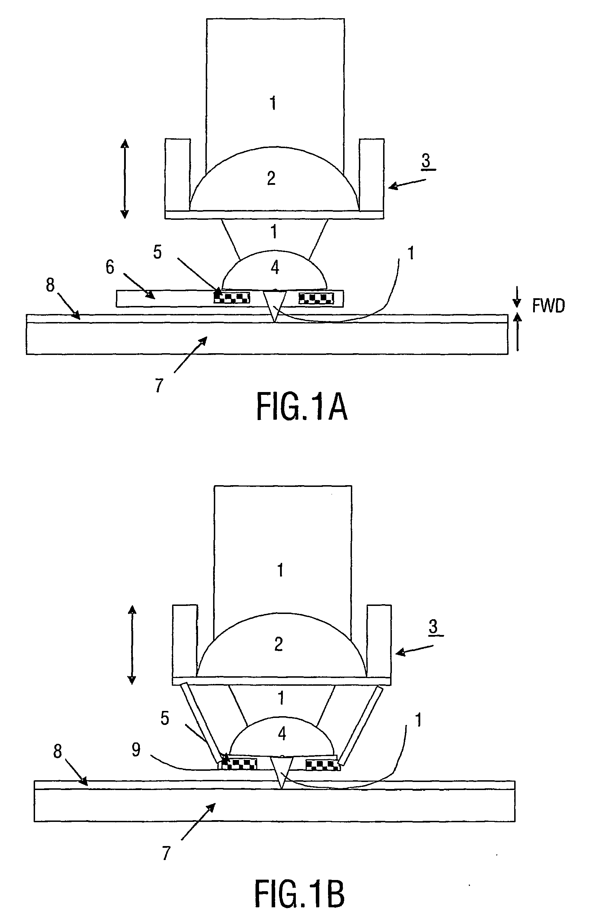

Figs. 1A and 1B illustrate two types of arrangements. In both arrangements a laser beam 1 is in operation shone though an objective lens 2 on a holder 3, through a second lens 4 to be focused on a disk 7. The disk 7 is provided with a cover layer 8. The laser beam 1 is shone through a coil 5. Figure 1A shows a type of read and/or write head of the so-called slider type, in which the second lens 4 and coil 5 is provided on a slider 6. Figure 1B shows a head of the so-called actuator type in which the lens 4 and coil 5 is provided on and/or in a glass wafer 9. The Free Working distance FWD is the distance between slider 6 or glass wafer 9 and the disk 7. A typical value for the FWD is less than 20 micrometer, typically 10 micrometer for an actuator or 1 micrometer for a slider.

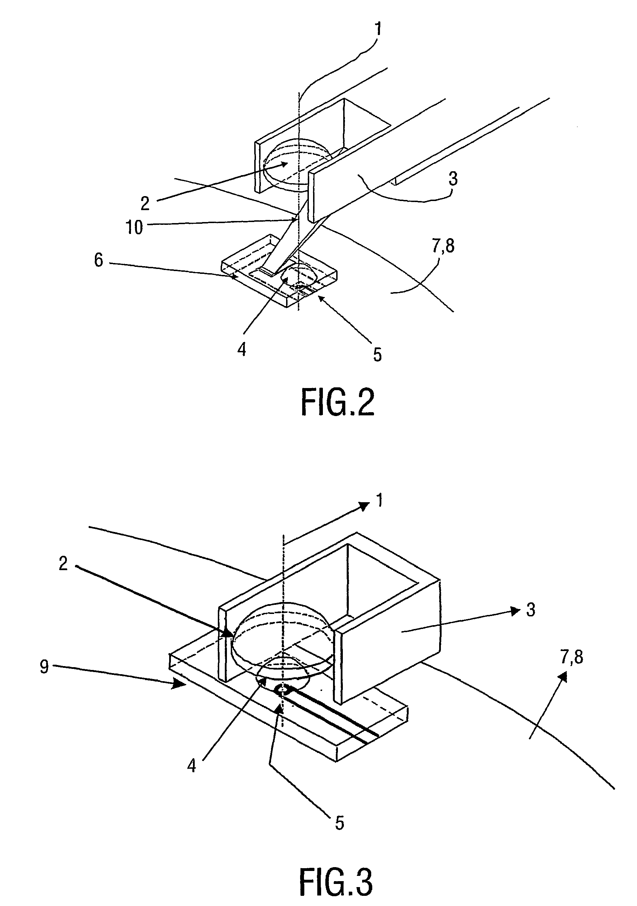

Fig. 2 shows in more detail a head of the type shown in Fig. 1A. The suspension 10 of the slider is shown in this figure. Figure 3 shows in somewhat more detail a head of the type shown in Fig. 1B.

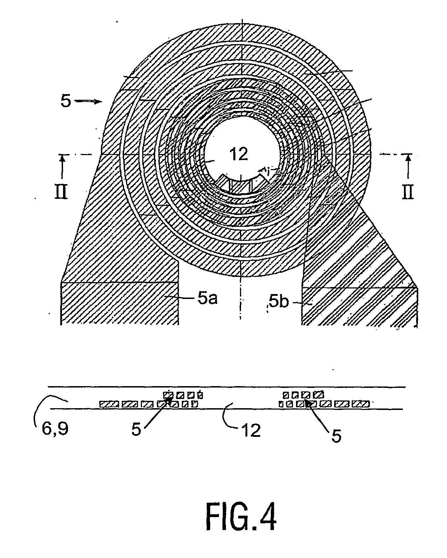

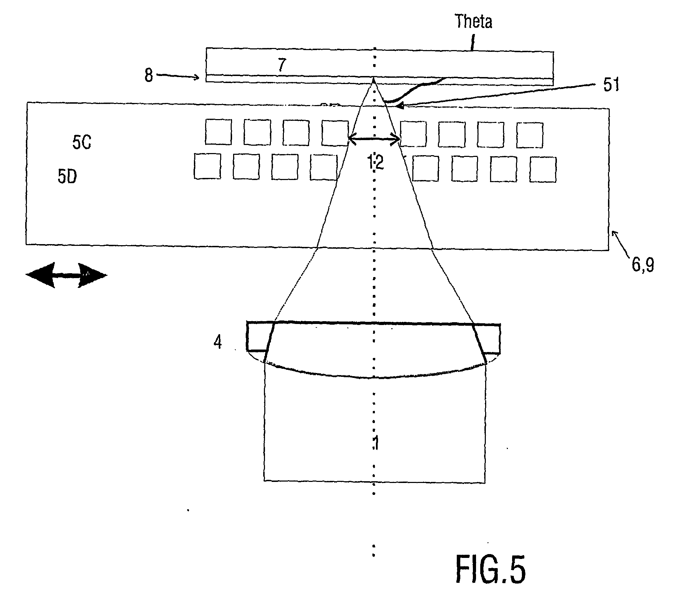

In all types the head comprises a coil 5. Figure 4 shows in more detail a coil 5. The coil comprises two leads 5a and 5b and an aperture 12 through which the laser beam in operation shines. The coil is part of, applied on, or embedded in the slider 6 or wafer 9. The head containing the coil is produced using thin film techniques. The coils are made on top of a wafer (e.g. glass) and are embedded in a dielectric material for example an oxide (e.g. Al₂O₃). In Fig 5 a schematic drawing is shown of the head when in use. The free working distance (FWD) between head and disc is less than 20 microns. In this example the coil comprises two coils layers 5C and 5D.

A number of aspects are of importance for the design:
The diameter of aperture 12 in the coil center;
The Free Working Distance FWD;
The numerical aperture NA (determined by the angle θ).

The energy efficiency of the coil decreases as the hole in the coil becomes larger, and also as the distance between the coil and the disk becomes larger.

The larger the angle theta, θ, the larger the numerical aperture NA ia and the larger the numerical aperture the higher the data density one can acquire.

Thus there is a tendency to increase the numerical aperture.

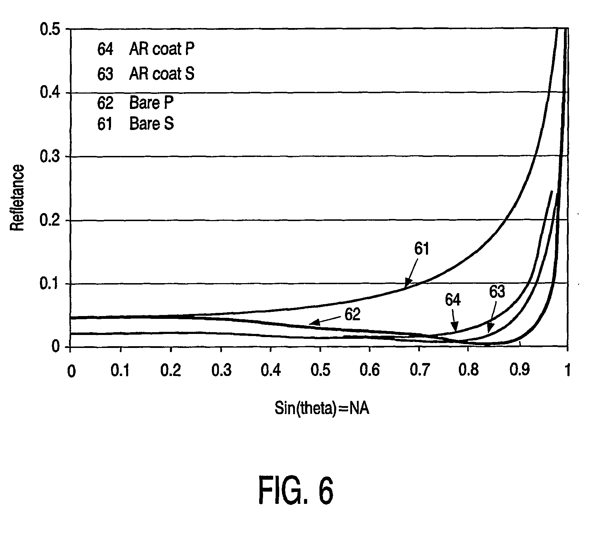

The inventors have, however, realized that the reflectance of laser light on the exit surface 51 of the coil holder 6 increase as the exit angle increases. Figure 6 illustrates this effect. The horizontal axis denotes the sine of the angle theta, the vertical axis the reflectance. Line 61 gives the reflectance of S-polarized light on an exit surface without an anti-reflective coating, line 62 the reflectance of P-polarized light on an exit surface without an anti-reflective coating. It is clear that especially S-polarized light, but also for P-polarized light, the reflectance increase to very high values at large values for the sine of the angle. Using anti-reflective coatings (lines 63 and 64 giving the reflectance using an anti-reflective coating for P- and S-polarized light, the situation improves, at least for values of the sine of the angle below approximately 0.75 to 0.85. However, above values for sine of the angle of 0.75 to 0.85 the reflectance goes steeply, even when use is made of an anti-reflection coating.

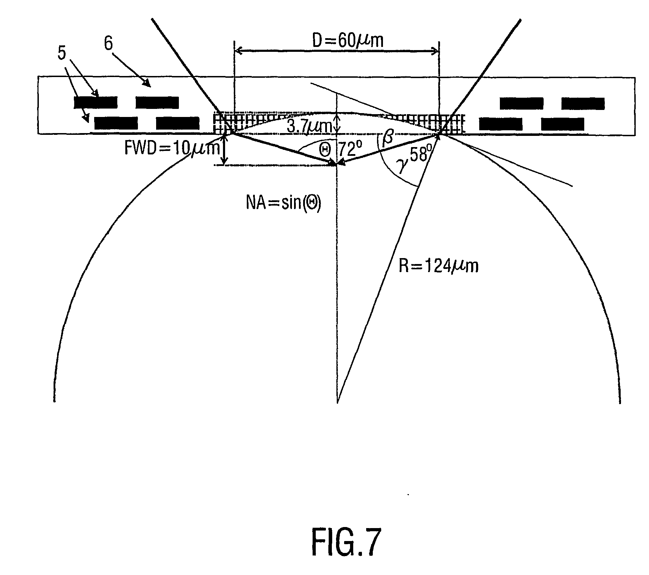

Fig. 7 illustrates the basic principle of the invention. The exit surface of the holder is concavely shaped with a radius of curvature R. Due to the radius of curvature the effective angle at the exit surface is reduced and thus the reflectance is reduced. D is the diameter of the concavely shaped exit surface. The value for D is usually slightly less than the diameter of the aperture 12 in the coil 5 and usually equal to or slightly more than the diameter of the laser beam at the exit surface. When this concavely shaped surface has a circular symmetry which will often be the case, the diameter is the diameter of the circle through the edge of the concavely shaped surface, for differently shaped surface (e.g. slightly oval) the diameter is the average of the lengths of the axes.

The following relations hold for the radius R:
1. Theoretical upper limit: R=∞ (flat plate), however, given the fact that it requires an extra step for making curved exit surfaces, this is not the practical limit for the invention.
2. Preferred solution: R=D/(2 cos(β+γ)) with sin(γ) is a value between =0.75 and 0.95.
3. All R in the range: D/(2 cos(β+γ)) ≤ R < ∞ helps to a certain extent, however in order to have a positive effect sufficient to justify the extra effort R≤15D, preferably R≤10D, even more preferably R≤4D. D is the diameter of aperture 12, which, when a curved exit surface, as in the present invention, is used is defined by the contours of the curved exit surface.
4. Lower limit: R=Sqrt[FWD²+D²/4] (focus at center of curvature), which is approximately D/2.
5. All R in the range: SQRT[FWD²+D²/4] ≤ R < D/(2 cos(β+γ)) makes a coating design a lot easier but this cost more optical power than strictly necessary.

Some typical, non-limiting, values for D and R are given in figure 7.

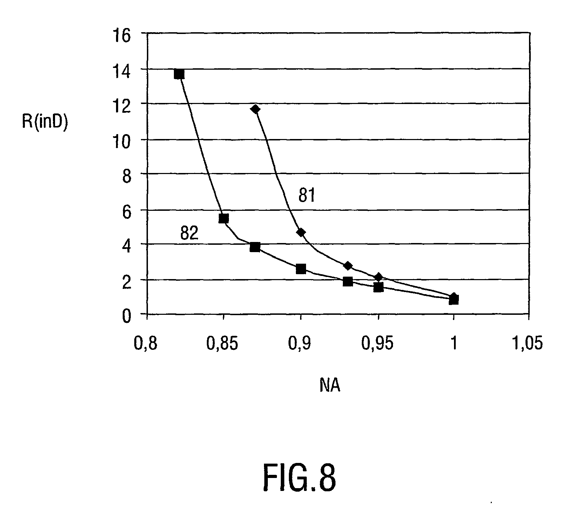

As explained above there is a relationship between the optimal value for R as a function of D, dependent on the values of β and γ, R=D/(2 cos(β+γ)). The value of β is dependent on the numerical aperture NA of the optical system since β + θ = 90° and NA=sin(θ). The value of γ is found by using fig. 6 as follows: One determines or chooses the value of reflectance which is deemed or calculated to be acceptable, for which one can do experimentation, trial and error or calculations. This value determines the sin(angle). The NA value will typically lie around 0.75-0.95. If one chooses NA=0.85 then sin(γ)=0.85 and γ=58°. Using these relationships one can calculate the optimum value for radius of curvature R, expressed in D as function of the numerical value NA and for a given value of γ. This is shown in fig. 8. Two lines are drawn, one (81) depicting the optimum value for R (expressed in D) as a function of NA for sin(γ)=0.85, and a second (line 82) for sin(γ) is 0.75. As can be seen the optimum values lie between 0.5D and 15 D, more in particular between 0.8D and 10D. The best values are between 1.5D and 4 D.

In case the concave surface is not a perfect sphere the radius of curvature is found by drawing a circle through the edges and the centre of the concave surface and calculation of the radius of curvature of this circle. If the radius of curvature is different in different directions, the device is a device in accordance with the invention if the radius of curvature is for at least one direction is within the indicated range(s), the diameter D being taken in the same direction.

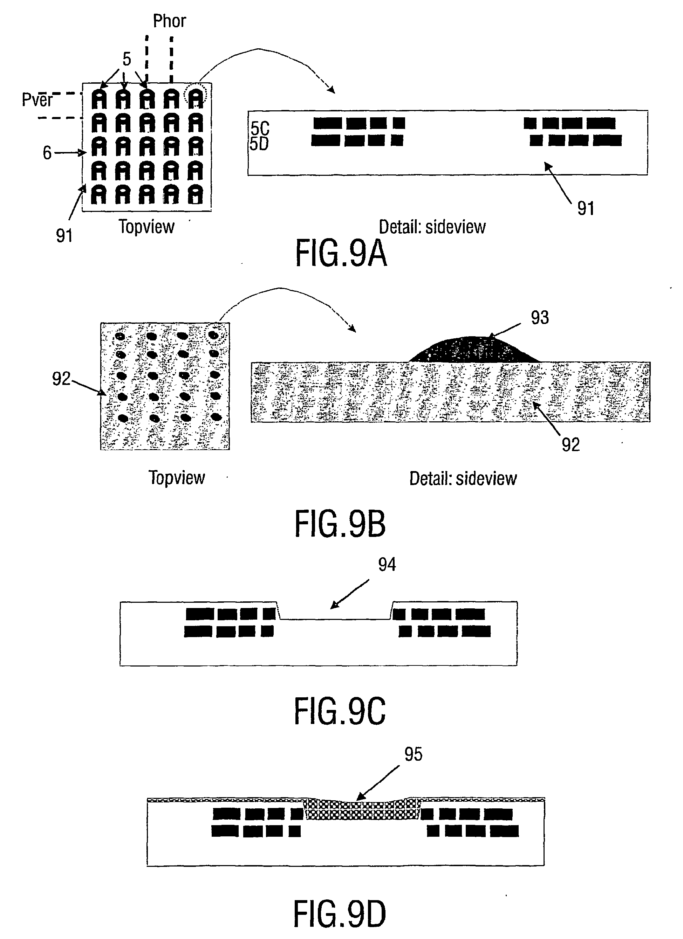

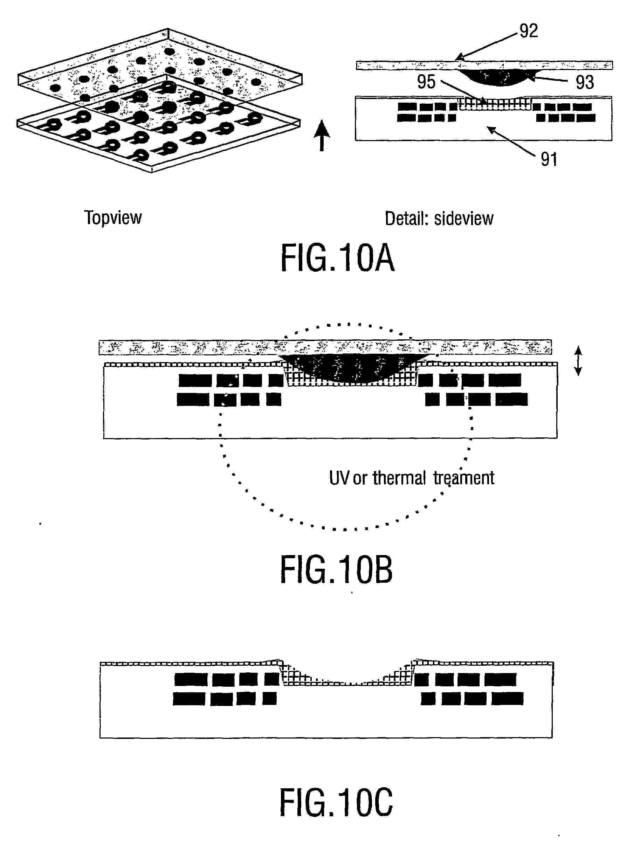

Figs. 9 and 10 illustrate a first method for producing coil holders for an optical device.
A. A wafer with coils (the coil-wafer 91) is fabricated preferably using thin film technology.
B. A wafer (the replica-wafer 92) with the same dimensions as the coil-wafer is fabricated, comprising spherical shaped replicas 93, with the same pitch Phor and Pver as the coils on the coil-wafer 91.
C. Using for instance lithographic patterning and a wet or dry etchant, a recess 94 is etched inside the optical center of the coil. The depth of the recess is of the order of a few microns (see also figure 7).
D. Next a replica lacquer (95) is provided (e.g. spun) over the wafer 92.
E. The coil-wafer 91 is turned upside down, and aligned with respect to the replica wafer 92.
F. The replica-wafer is moved towards the coil-wafer in a controlled way. The replica is transferred into the lacquer. Next a curing step, such as e.g. UV cure or heat treatment is applied.
G. The replica-wafer is moved back, leaving the coil-wafer with the replicated structure.

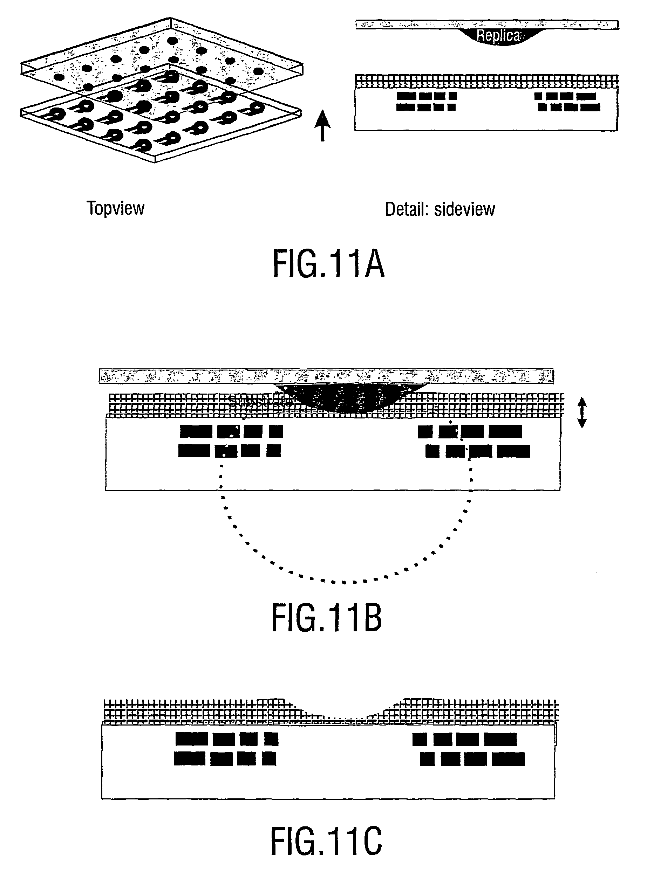

The provision of a recess 94 is optional. Fig. 11 illustrates a method in which the lacquer layer is provided directly on the replica wafer.

The replica wafer can be fabricated using several techniques, examples are:
1. The replicas are manufactured separately and are subsequently positioned on the wafer. The positioning can be aided by first etching recesses in the wafer on the positions were the replicas have to be positioned.
2. Using a polymer reflow technique and subsequent etching, the lenses can be made directly on the wafer.

### Alignment procedure

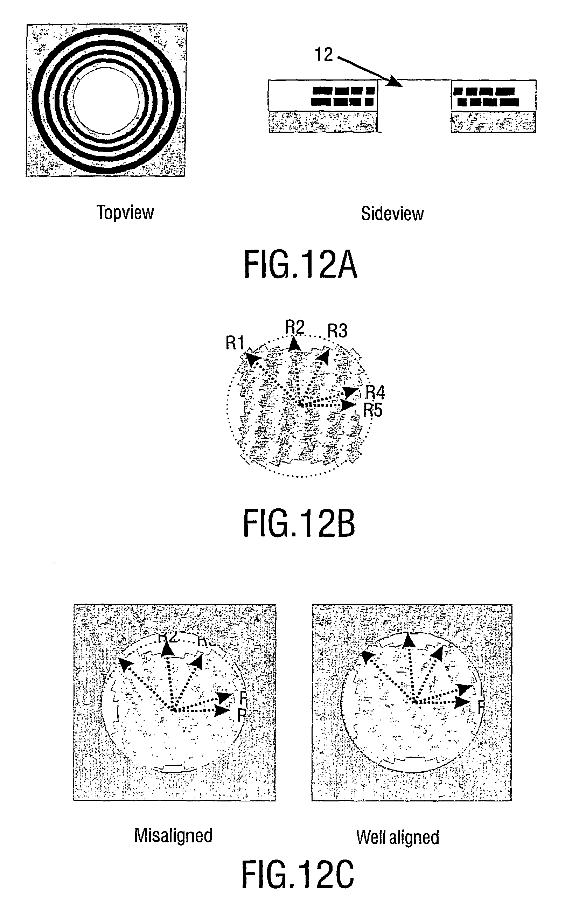

The alignment procedure depends on whether one uses transparent or opaque wafers. See Fig 12.
1. Transparent coil wafer (and transparent or opaque replica wafer).
   The alignment can be done easily. On the coil-wafers a set of alignment markers is defined for the fabrication of the coils. On the replica wafer, also the same kind of alignment markers at the same position are defined. Since the coil wafer is placed up side down and the wafer is transparent, the markers of the coil wafer can be easily aligned with respect to the replica wafer, by looking through the transparent coil-wafer. When the markers are aligned, also the center of the coils are aligned to the center of the replicas.
2. Opaque coil wafer
   i. *Transparent replica-wafers*: The same procedure as described above can be used, with the difference that now the alignment has to be done by looking through the replica wafer.
*Opaque replica wafers*: In the case the coil wafer is opaque, the optical center of the coil still has to be transparent, otherwise it cannot be used for MO storage. This gap can either be made by dry or wet etching or drilling of the wafer. The gap can consist of air or any transparent oxide. Extra holes can be made at the same time the coil holes are fabricated, at the edges of the wafer. On the replica-wafer, alignment structures have to be defined at the same position as the extra holes on the coil-wafers. An example of a needed marker structure is shown in Fig 12B. This structure consists of several concentric rings with radius R1 to R5. The outer rings are divided in 4 sections, where the sections decrease in size with increasing radius. The values for the different radii are determined by the necessary positioning accuracy. Now the coil-wafer can be aligned to the replica wafer, by looking through the extra holes of the coil wafer and positioning the marker structure exactly in the middle of the hole (Fig 12C). At least two holes and two corresponding marker structures are needed to align the wafers correctly.

## Claims

1. A magneto optical device comprising a magneto optical read and/or write head with a coil (5) on a coil holder (6, 9), the coil holder (6,9) comprising a transparent aperture (12) in the coil (5) for passing a laser beam (1), **characterized in that** the exit surface (51) of the coil holder (6,9) is concavely shaped at the aperture (12) with a radius of curvature R lying between 0.5D and 15 D (0.5D≤ R≤ 15D) where D is the diameter of the concavely shaped exit surface.

2. A magneto optical device as claimed in claim 1, wherein the radius of curvature R lies between 0.8D and 10 D (0.8D≤ R≤ 10D).

3. A magneto optical device as claimed in claim 1, wherein the radius of curvature R lies between 1.5D and 4 D (1.5D≤ R≤ 4D).

4. A magneto optical device as claimed in claim 1, wherein the exit surface is provided with an anti-reflection coating.

5. A magneto optical device as claimed in claim 1, wherein the exit surface does not comprise an anti-reflection coating.

## Patentansprüche

1. Magnetooptische Einrichtung, einen magnetooptischen Lese- und/oder Schreibkopf mit einer Spule (5) auf einem Spulenhalter (6, 9) umfassend, wobei der Spulenhalter (6,9) eine transparente Öffnung (12) in der Spule (5) zum Durchlassen eines Laserstrahlenbündels (1) umfasst, **dadurch gekennzeichnet, dass** die Austrittsfläche (51) des Spulenhalters (6,9) an der Öffnung (12) konkav geformt ist, mit einem Krümmungsradius R, der zwischen 0,5 D und 15 D liegt (0,5D≤ R≤ 15D), wobei D der Durchmesser der konkav geformten Austrittsfläche ist.

2. Magnetooptische Einrichtung nach Anspruch 1, bei der der Krümmungsradius R zwischen 0,8 D und 10 D liegt (0,8D≤ R≤ 10D).

3. Magnetooptische Einrichtung nach Anspruch 1, bei der der Krümmungsradius R zwischen 1,5 D und 4 D liegt (1,5D≤ R≤ 4D).

4. Magnetooptische Einrichtung nach Anspruch 1, bei der die Austrittsfläche mit einer Antireflexionsbeschichtung versehen ist.

5. Magnetooptische Einrichtung nach Anspruch 1, bei der die Austrittsfläche keine Antireflexionsbeschichtung umfasst.

## Revendications

1. Dispositif magnéto-optique comprenant une tête de lecture et/ou d'écriture magnéto-optique avec une bobine (5) sur un support de bobine (6, 9), le support de bobine (6, 9) comprenant une ouverture transparente (12) dans la bobine (5) pour transmettre un faisceau laser (1), **caractérisé en ce que** la surface de sortie (51) du support de bobine (6, 9) est façonnée de manière concave à l'endroit de l'ouverture (12) avec un rayon de courbure R qui se situe dans la gamme comprise entre 0,5 D et 15 D (0,5D ≤ R ≤ 15D) où D est le diamètre de la surface de sortie façonnée de manière concave.

2. Dispositif magnéto-optique selon la revendication 1, dans lequel le rayon de courbure R se situe dans la gamme comprise entre 0,8 D et 10 D (0,8D ≤ R ≤ 10D).

3. Dispositif magnéto-optique selon la revendication 1, dans lequel le rayon de courbure R se situe dans la gamme comprise entre 1,5 D et 4 D (1,5D ≤ R ≤ 4D).

4. Dispositif magnéto-optique selon la revendication 1, dans lequel la surface de sortie est pourvue d'une couche de revêtement anti-réfléchissante.

5. Dispositif magnéto-optique selon la revendication 1, dans lequel la surface de sortie ne comprend pas de couche de revêtement anti-réfléchissante.
